**Europäisches Patentamt**

**European Patent Office**

**Office européen des brevets**

(19)

(11) Veröffentlichungsnummer: **0 245 651**
**A2**

# (12) EUROPÄISCHE PATENTANMELDUNG

(21) Anmeldenummer: **87105183.5**

(22) Anmeldetag: **08.04.87**

(51) Int. Cl.⁴: **H02H 9/00 , H02J 3/18**

(30) Priorität: **15.05.86 DE 3616334**

(43) Veröffentlichungstag der Anmeldung:
**19.11.87 Patentblatt 87/47**

(84) Benannte Vertragsstaaten:
**CH DE FR GB LI SE**

(71) Anmelder: **BBC Brown Boveri AG**

**CH-5401 Baden(CH)**

(72) Erfinder: **Rey, Antoine**
**St. Jakobsstrasse 53**
**CH-4052 Basel(CH)**
Erfinder: **Stemmler, Herbert, Dr.**
**Ahornweg 16**
**CH-5416 Kirchdorf(CH)**

(54) **Verfahren zur Dämpfung mindestens einer elektrischen Oberschwingung zur Netzfrequenz in einem mehrphasigen Wechselstromnetz.**

(57) In Wechselstromnetzen treten unerwünschte Oberschwingungungen auf, insbesondere die zweite Harmonische. Um mit einfachen Mitteln eine wirksame Dämpfung dieser Oberschwingungen zu erreichen, wird bei einem Blindleistungskompensator (9, 12; 10, 13), der über einen Blindleistungstransformator (8) und einen Stromwandler (17) an ein 50-Hz-Drehstromnetz (15) angeschlossen ist, ein zusätzlicher Stabilisierungskreis (21, 25 - 28, 23) in eine herkömmliche Strom-Spannungsregelung mit einem StromSpannungsregler (22) und einem dreiphasigen Zündimpulsgenerator (24) eingebaut Der Blindleistungskompensator weist für jede Phase des Drehstromes mindestens eine Luftdrossel (9) auf, die über einen Stromwandler (19) und über einen Wechselstromschalter (12) mit antiparallelen Thyristoren über einen weiteren Summenstromwandler (18) an eine Sekundärwicklung des Blindleistungstransformators (8) angeschlossen ist. Zusätzlich weist der Blindleistungskompensator je Phase des Drehstromes mindestens eine Kondensatorbank oder einen Kondensator (10) auf, der über einen Stromwandler (20) und einen Wechselstromschalter (13) an den Summenstromwandler (20) angeschlossen ist. Der Stabilisierungskreis erfasst einen oberschwingungshaltigen Magnetisierungsstrom als Differenz aus Kompensatorstrom ($i_K$) und Summenstrom ($i_{Su}$) primär-und sekundärseitig vom Blindleistungstransformator (8) und mittels eines Spannungswandlers (16) ein netzfrequentes Spannungssignal (U), das proportional zur Netzspannung ($U_N$) ist. Diese beiden dreiphasigen Strom-und Spannungssignale werden in einem Blindleistungsmesser (25) in ein einziges Gleichspannungssignal (Q) umgewandelt. Eine eingangsseitige Oberschwingung von 100 Hz tritt ausgangsseitig als 50-Hz-Signal auf, das in einem Bandpassfilter (26) herausgefiltert und nach einer +90° Phasenverschiebung (27) über einen zweiseitigen Begrenzer (28) in einem Addierglied (23) zu dem herkömmlichen Ausgangssignal des Strom-Spannungsreglers (22) addiert wird.

EP 0 245 651 A2

Xerox Copy Centre

0 245 651

$U_N = 120 kV\sim, 50 Hz$

15

16

$i_K$

17

8

$i_K - i_{Su}$

21

$i_K$

22

23

24

12

13

$i_{Su}$

18

25 47

50Hz 26

27
+90°

28

$i_{Su}$

19

9

$U_i / Q$

150Hz 26'

27
+90°

28

20

10

26''

27
+90°

28

14

29

$(2n-1) f_0$ Hz

S23

FIG. 2

1a

# Verfahren zur Dämpfung mindestens einer elektrischen Oberschwingung zur Netzfrequenz in einem mehrphasigen Wechselstromnetz

Bei der Erfindung wird ausgegangen von einem Verfahren zur Dämpfung mindestens einer elektrischen Oberschwingung zur Netzfrequenz in einem mehrphasigen Wechselstromnetz nach dem Oberbegriff des Patentanspruchs 1.

Mit diesem Oberbegriff nimmt die Erfindung auf einen Stand der Technik von Verfahren zur Dämpfung mindestens einer elektrischen Oberschwingung zur Netzfrequenz in einem mehrphasigen Wechselstromnetz Bezug, wie er von P.V. Goosen u.a., FC/TCR Type Static Compensators in ESCOM's 132 kV Network, International Conference on Large High Voltage Electric Systems, 29.8.-6.9.1984 in Paris, Cigre Paper No. 38-09, S. 1-9, 1984 beschrieben ist. Dort sind in Dreieckschaltung verbundene Saugkreise oder Luftdrosseln für statische Blindleistungskompensatoren jeweils in Reihe mit Wechselstromschaltern, die antiparallele Thyristoren aufweisen, über einen sättigbaren 35-MVA-Transformator an ein 132-kV-Wechselstromnetz angeschlossen. Gerät der Transformator bei hohen Strömen magnetisch in Sättigung, so entsteht eine unerwünschte erste Oberschwingung zur Netzfrequenz im Stromversorgungsnetz. Vor allem die durch die zweite Harmonische verursachte Instabilität wird gedämpft, indem der durch sie verursachte Gleichstromanteil im Wechselstrom des Blindleistungskompensators mit speziellen Gleichstromwandlern erfasst und mit einem langsamen Integralregler korrigiert wird. Für jeden Zweig der Dreieckschaltung ist eine eigene Spannungsregelung vorgesehen. Zusätzlich ist ein Filter für die zweite Harmonische in den Starkstromkreis eingebaut.

Nachteilig ist, dass für jeden Zweig der Dreieckschaltung ein besonderer Regelkreis sowie zusätzlich ein auf die Oberschwingung abgestimmtes Filter erforderlich sind.

Die Erfindung, wie sie im Patentanspruch 1 definiert ist, löst die Aufgabe, ein Verfahren zur Dämpfung mindestens einer elektrischen Oberschwingung zur Netzfrequenz in einem mehrphasigen Wechselstromnetz anzugeben, das eine wirksame Dämpfung mit einfacheren Mitteln ermöglicht.

Ein Vorteil der Erfindung besteht in einer Verringerung des Aufwandes für eine Dämpfung unerwünschter Oberschwingungen. Es genügt ein Regelkreis mit einem einzigen Stabilisierungssignal für alle steuerbaren Impedanzzweige, die an den sättigbaren Transformator angeschlossen sind. Es ist keine individuelle Steuerung jeder Phase des Wechselstromschalters nötig. Der stabilisierende Effekt wird allein durch die Steuerung der Wechselstromschalter erreicht. Ein zusätzliches teueres, für hohe Ströme ausgelegtes Oberschwingungsfilter ist nicht erforderlich.

Gemäss einer vorteilhaften Ausgestaltung der Erfindung genügen zur Messung der Ströme normale Wechselstromwandler, da praktisch nur die Ströme der zweiten Harmonischen erfasst werden müssen. Da der Gleichstromanteil nicht gemessen werden muss, sind keine teuren und aufwendigen hochpräzisen Gleichstromwandler nötig.

Zum einschlägigen Stand der Technik wird zusätzlich auf Schweikardt u.a., Closed Loop Control of Static Var Sources (SVS) on EHV Transmission Lines, IEEE PES A 78 135-6, 1978, verwiesen, aus der ein Strom-Spannungsregler für einen dreiphasigen Zündimpulsgenerator bekannt ist, der in Verbindung mit der vorliegenden Erfindung verwendet werden kann.

Die Erfindung wird nachstehend anhand von Ausführungsbeispielen beschrieben. Es zeigen:

Fig. 1 ein Blockschaltbild eines typischen, an ein Drehstromnetz angeschlossenen Blindleistungskompensators, der über einen Blindleistungstransformator, in dem zu dämpfende Oberschwingungen auftreten können, an ein Drehstromnetz angeschlossen ist,

Fig. 2 ein erstes Ausführungsbeispiel einer Reglerschaltung zur Kompensation von Oberschwingungen in Verbindung mit einem Blindleistungskompensator gemäss Fig. 1,

Fig. 3 ein Blockschaltbild eines Blindleistungsmessers der Reglerschaltung gemäss Fig. 2,

Fig. 4 ein zweites Ausführungsbeispiel einer Reglerschaltung zur Kompensation von Oberschwingungen, bei dem Wirk-und Blindleistung als Messgrösse erfasst werden und auf eine netzfrequente Referenzgrösse bezogen sind,

Fig. 5 ein drittes Ausführungsbeispiel einer Reglerschaltung zur Kompensation von Oberschwingungen, bei dem Wirk-und Blindleistung als Messgrösse erfasst werden und auf die erste Oberschwingung zur Netzfrequenz als Referenzgrösse bezogen sind,

Fig. 6 ein Blockschaltbild eines Dreiphasen/Zweiphasen-Koordinatenwandlers gemäss den Fig. 4 und 5 und

Fig. 7 ein Blockschaltbild eines Zweiphasen/Dreiphasen-Koordinatenwandlers gemäss Fig. 5.

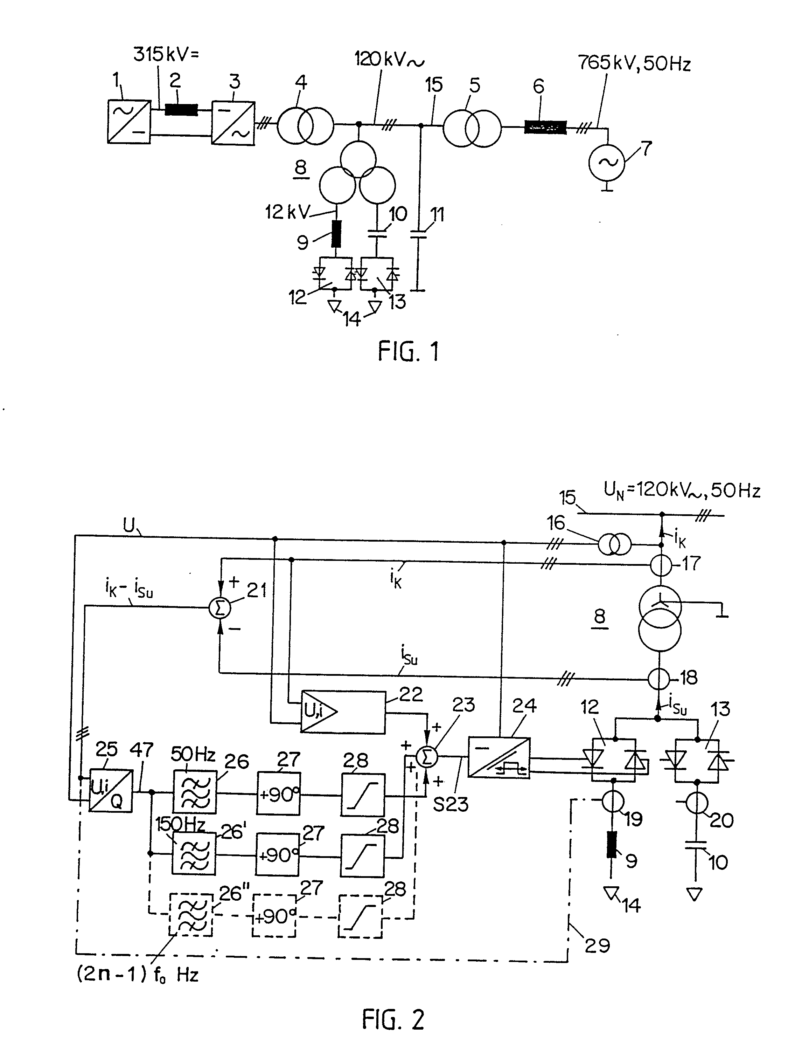

In Fig. 1 ist mit 1 ein Gleichrichter bezeichnet, der über einen Gleichstromzwischenkreis mit einer Zwischenkreisdrossel 2 mit einem Wechselrichter 3 zu einer Hochspannungs-Gleichstrom-Uebertragungsanlage (HGÜ) verbunden ist. Die Zwischenkreis-Gleichspannung beträgt 315 kV. Die Zwischenkreisdrossel ist für eine Leistung von 1 GW bemessen. Der Wechselrichter 3 speist über einen HGÜ-Transformator 4 ein Drehstromnetz 15 mit einer Wechselspannung von 120 kV. Das Drehstromnetz 15 ist über einen Abspanntransformator 5 mit einem weiteren dreiphasigen Stromversorgungsnetz, das eine Netzimpedanz 6, eine 50-Hz-Wechselspannung von 765 kV und eine Netzspannungsquelle 7 aufweist, verbunden. An das Drehstromnetz 15 ist ferner über einen magnetisch sättigbaren Blindleistungstransformator 8, dessen sekundärseitige Wechselspannung 12 kV beträgt, an eine für eine Blindleistung von 2 • 120 MVA ausgelegte Luftdrossel 9 und an eine für eine Blindleistung von 2 • 150 MVA ausgelegte Kondensatorbank bzw. an einen Blindleistungskondensator 10 angeschlossen. Luftdrossel 9 und Blindleistungskondensator 10 sind über in Reihe geschaltete Wechselstromsteller bzw. -schalter 12 bzw. 13, welche antiparallele Thyristoren aufweisen, steuerbar. Die steuerbare Luftdrossel 9 ist mit zwei weiteren, nicht dargestellten steuerbaren Luftdrosseln der beiden anderen Spannungsphasen in Dreieck geschaltet, was durch ein mit 14 gekennzeichnetes Dreieck angedeutet ist. In gleicher Weise ist der steuerbare Blindleistungskondensator 10 in Dreieck geschaltet. Ferner ist das Drehstromnetz über einen Filterkondensator 11, der für eine Blindleistung von 300 MVA bemessen ist, geerdet.

Ein solches System, bestehend aus Wechselstromschalter 12, Luftdrossel 9, Wechselstromschalter 13, Kondensator 10, Blindleistungstransformator 8, Filterkondensator 11, HGÜ-Transformator 4, HGÜ 1-3, Abspanntransformator 5, Netzimpedanz 6 und Netzspannungsquelle 7, kann instabil werden und mit der ersten Oberschwingung (100 Hz) zur Netzfrequenz von 50 Hz schwingen, wenn die Netzverstärkung bei der ersten Oberschwingung gross genug ist, d.h., wenn die Impedanz am Abschlusspunkt des Blindleistungstransformators 8 bei der ersten Oberschwingung gross ist, und wenn der Wechselstromschalter 12 zwischen 90° und 180° ausgesteuert wird. Die Instabilität tritt selbst dann auf, wenn bezüglich der Netzwechselspannung äquidistante Zündimpulse an den Wechselstromschalter 12 abgegeben werden.

Die der ersten Oberschwingung entsprechende zweite harmonische Instabilität ist ein geschlossener, sich selbst erregender Wirkungskreis. Zum besseren Verständnis nehmen wir an, dass der Netzspannung im Anschlusspunkt des Blindleistungstransformators 8 eine kleine Spannung mit der zweiten Harmonischen der Netzfrequenz überlagert ist. Dies verursacht einen Gleichstromanteil im Wechselstromschalter 12. Der Gleichstromanteil erzeugt eine Gleichflusskomponente im Eisenkern des Blindleistungstransformators 8, so dass dessen Magnetisierungsstrom unsymmetrisch wird und gradzahlige Harmonische, insbesondere auch die zweite Harmonische, enthält. Dieser zweite harmonische Strom sieht eine grosse Impedanz am Anschlusspunkt des Blindleistungstransformators 8 und erzeugt an dieser Impedanz eine zweite harmonische Spannung. Damit ist der Wirkungskreis für die zweite harmonische Instabilität geschlossen.

Fig 2 zeigt einen Stabilisierungskreis für die Dämpfung von Oberschwingungen, der ergänzend zu einer schon bekannten Strom-Spannungs-oder Blindleistungsregelung eingebaut werden kann und einen stabilen Betrieb des Blindleistungskompensators ermöglicht. In allen Figuren sind gleiche Teile mit denselben Bezugszeichen versehen.

Die Netzspannung $U_N$ von 120 kV/50 Hz des Drehstromnetzes 15 liegt über einen Stromwandler 17 an der in Stern geschalteten und im Sternpunkt geerdeten Primärwicklung des Blindleistungstransformators 8. $i_K$ bezeichnet den Kompensatorstrom und ein diesem proportionales Kompensatorstromsignal am Ausgang des Stromwandlers 17. Die Sekundärwicklung des Blindleistungstransformators 8 ist über einen Stromwandler 18 einerseits mit einem Wechselstromschalter 12 und andererseits mit einem Wechselstromschalter 13 verbunden. $i_{Su}$ bezeichnet einen Summenstrom durch die beiden Wechselstromschalter 12 und 13 und ein diesem proportionales Summenstromsignal am Ausgang des Stromwandlers 18.

Der Wechselstromschalter 12 ist andererseits über einen Stromwandler 19 mit der Luftdrossel 9 in Reihe und mit weiteren zwei nicht dargestellten, gesteuerten Luftdrosseln der anderen beiden Spannungsphasen in Dreieck geschaltet. Der Wechselstromschalter 13 ist über einen Stromwandler 20 mit dem Blindleistungskondensator 10 in Reihe und mit weiteren zwei nicht dargestellten, gesteuerten Blindleistungskondensatoren der anderen beiden Spannungsphasen in Dreieck geschaltet. Die beiden Wechselstromschalter 12 und 13 erhalten ihre Steuersignale von einem Strom-Spannungsregler 22 über ein Addierglied 23 und über einen mit dessen Ausgang verbundenen dreiphasigen Zündimpulsgenerator 24, wie sie z.B. aus der o.g. IEEE Publikation A 78 135-6 bekannt sind.

3

Der Strom-Spannungsregler 22 liefert in Abhängigkeit von dem Kompensatorstromsignal $i_K$ und von einem zur Netzspannung $U_N$ proportionalen Spannungssignal U über das Addierglied 23 ein einziges Steuersignal S23 an den Zündimpulsgenerator 24. Eingangsseitig ist der Zündimpulsgenerator 24 zusätzlich mit dem sekundärseitigen Ausgang eines Spannungswandlers 16 verbunden. An der Sekundärwicklung des Spannungswandlers 16 ist das Spannungssignal U abgreifbar. Primärseitig ist der Spannungswandler 16 an das Drehstromnetz 15 angeschlossen.

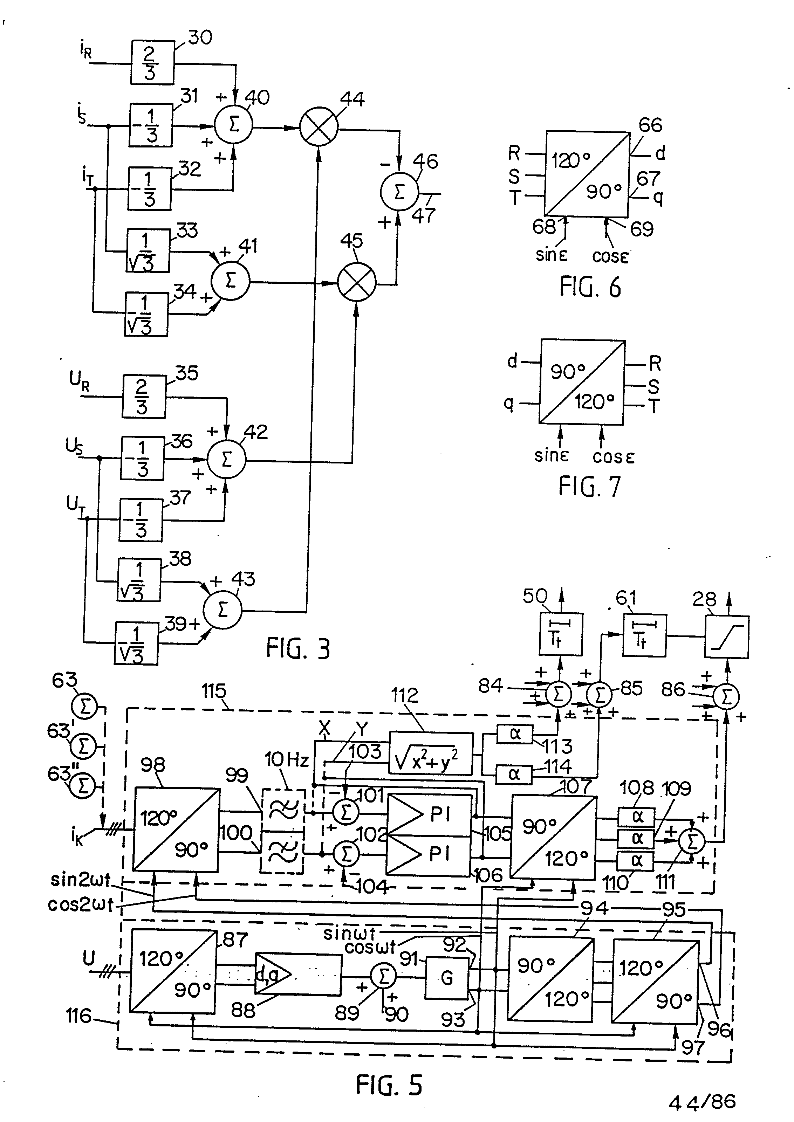

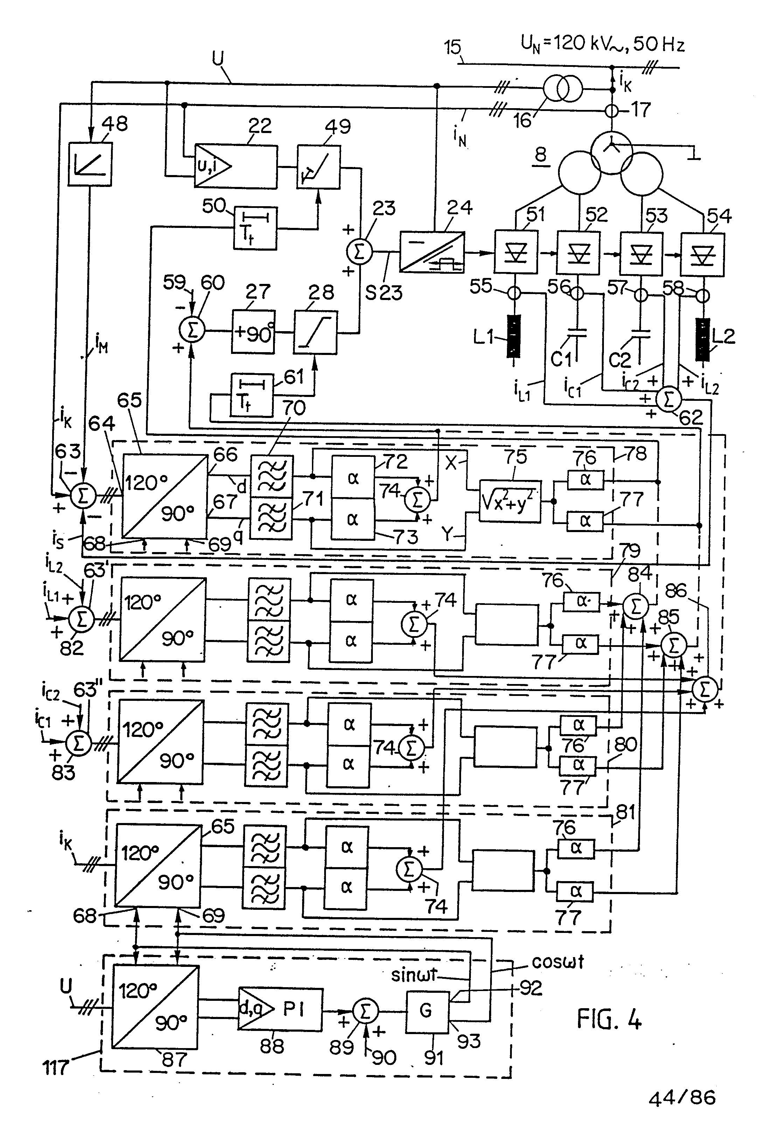

Das Kompensatorstromsignal $i_K$ ist dem "+"-Eingang und das Summenstromsignal $i_{su}$ dem "-"-Eingang eines Addiergliedes 21 zugeführt. Ausgangsseitig ist das Addierglied 21 mit einem Stromsignaleingang des näher in Verbindung mit Fig. 3 beschriebenen Blindleistungsmessers 25 verbunden. Einem Spannungssignaleingang des Blindleistungsmessers 25 ist das Spannungssignal U vom Ausgang des Spannungswandlers 16 zugeführt, das gleichzeitig als Frequenzreferenzgrösse dient. Am Ausgang 47 liefert der Blindleistungsmesser 25 ein Blindleistungssignal Q als Gleichspannungswert, dem ggf. Oberschwingungen der Frequenzen $(2n-1) \bullet f_0$ überlagert sind, n ganzzahlig $\geq 1$, $f_0$ = Netzfrequenz = 50 Hz. Da die Referenzfrequenz für den Blindleistungsmesser 25 50 Hz beträgt, erscheint die erste Oberschwingung von 100 Hz relativ zur Referenzfrequenz $f_0$ mit einer Frequenz von 50 Hz.

Der Ausgang 47 des Blindleistungsmessers ist mit einem Bandpassfilter 26, das 50-Hz-Schwingungen durchlässt, ferner mit einem Bandpassfilter 26', das 150-Hz-Schwingungen durchlässt, und mit einem oder ggf. mehreren Bandpassfiltern 26", die Schwingungen der Frequenzen $(2n-1) \bullet f_0$ durchlassen, $n \geq 3$, verbunden. Diese Bandpassfilter 26, 26' und 26" sind ausgangsseitig jeweils über an sich bekannte +90°-Phasenschieber oder Stabilisierungsfilter mit ebenfalls handelsüblichen, zweiseitigen Begrenzern 28 verbunden. Diese Begrenzer 28 sind ausgangsseitig je mit einem "+"-Eingang des Addiergliedes 23 verbunden.

Anstelle des Magnetisierungsstromes $i_K$ -$i_{su}$ des Blindleistungstransformators 8 am Ausgang des Addiergliedes 21 kann dem Stromsignaleingang des Blindleistungsmessers 25 das Stromausgangssignal des Stromwandlers 19 über die gestrichelt gezeichnete Signalleitung 29 zugeführt sein.

Der Stabilisierungskreis besteht aus der Erfassung des zu stabilisierenden Signals (Magnetisierungsstrom $i_K$-$i_{su}$ oder Strom durch die Luftdrossel 9), der Umwandlung des dreiphasigen Signals in ein einziges Signal (U,i/Q-Transformation), mindestens einem Bandpassfilter, der das (die) Stabilisierungssignal(e) herausfiltert, mindestens einem Phasenschieber und einem Addierer, der das (die) Stabilisierungssignal(e) zu dem Ausgangssignal des normalen Strom-Spannungsreglers 22 addiert.

Falls nur die zweite Harmonische gedämpft werden soll, können die Bandpassfilter 26' und 26" mit nachgeordneten 90°-Phasenschiebern und zweiseitigen Begrenzern weggelassen werden.

Fig. 3 zeigt ein Blockschaltbild eines Blindleistungsmessers 25. $i_R$, $i_S$, $i_T$ bezeichnen eingangsseitige Phasenstromsignale, die vom Ausgang des Addiergliedes 21 oder von drei Stromwandlern 19 geliefert werden, wobei in Fig. 2 nur ein Stromwandler 19 dargestellt ist. $U_R$, $U_S$, $U_T$ bezeichnen eingangsseitige Phasenspannungssignale, die vom Ausgang des Spannungswandlers 16 geliefert werden. Mit 30 - 39 sind Koeffizientengeber mit in den Blöcken angegebenen Koeffizienten bezeichnet, mit 40 - 43 Addierglieder mit "+"-Eingängen, mit 44 und 45 Multiplizerer und mit 46 ein Addierglied, das über einen "-"-Eingang mit dem Ausgang des Multiplizierers 44 und über einen "+"-Eingang mit dem Ausgang des Multiplizierers 45 verbunden ist. Am Ausgang 47 erhält man das gewünschte Blindleistungssignal Q, dessen Gleichspannungswert von einer 50-Hz-Schwingung überlagert ist, falls die Netzspannung eine zweite Harmonische von 100 Hz aufweist.

Bei dem Ausführungsbeispiel der Erfindung gemäss Fig. 4 weist der Blindleistungskompensator je Phase vier an die Sekundärwicklungen des Blindleistungstransformators 8 angeschlossene Wechselstromschalter 51 - 54 mit dazu jeweils über Stromwandler 55 - 58 in Reihe geschalteten Impedanzen L1, C1, C2, L2 auf, wobei L1 und L2 Luftdrosseln bzw. Induktivitäten und C1, C2 Kondensatorbänke oder Kondensatoren bezeichnen. Alle vier Impedanzen einer Drehstromphase sind mit den je vier Impedanzen der beiden anderen Drehstromphasen in Dreieckschaltung verbunden (nicht dargestellt). Die Stromsignale am Ausgang der Stromwandler 55 - 58 sind mit $i_{L1}$, $i_{C1}$, $i_{C2}$, $i_{L2}$ bezeichnet und "+"-Eingängen eines Addiergliedes 62 zugeführt, das ausgangsseitig mit einem "-"-Eingang eines Addiergliedes 63 verbunden ist.

Der Strom-Spannungsregler 22 ist eingangsseitig mit den Ausgängen der Spannungs-und Stromwandler 16 und 17 und ausgangsseitig über einen Begrenzer 49 mit einstellbarem einseitigem Grenzwert mit einem "+"-Eingang des Addiergliedes 23 verbunden. Dessen einziges Ausgangssignal S23 steuert den dreiphasigen Zündimpulsgenerator 24, der Steuerimpulse an die Wechselspannungsschalter 51 - 54 liefert.

Einem "+"-Eingang des Addiergliedes 63 ist das Kompensator-Stromsignal $i_K$ vom Ausgang des Stromwandlers 17 zugeführt. Ein weiterer "-"-Eingang des Addiergliedes 63 ist über einen Integrator 48 mit dem sekundärseitigen Ausgang des Spannungswandlers 16 verbunden. Der Integrator 48 liefert ausgangsseitig ein Magnetisierungsstromsignal $i_M$ des Blindleistungstransformators 8

$$i_M = \frac{1}{L} \int U_N \, dt,$$

wobei L eine Konstante ist, die der Haupt-Induktivität des Blindleistungstransformators 8 entspricht. Mit $i_M$ wird der Grundschwingungsanteil des Magnetisierungsstromes erfasst, nicht der Anteil etwa vorhandener magnetischer Sättigungsspitzen.

Das Ausgangssignal des Addiergliedes 63 liefert somit den magnetischen sättigungsanteil des Stromes, der infolge von Stromoberschwingungen auftreten kann und zu deren Dämpfung ausgewertet wird. Das Addierglied 63 ist ausgangsseitig mit dem Eingang 64 eines näher in Verbindung mit Fig. 6 beschriebenen Dreiphasen/Zweiphasen-Koordinatenwandlers 65 verbunden.

Von einem Referenzfrequenzsignal-Steuersatz 117 sind weiteren Eingängen 68 und 69 des Dreiphasen/Zweiphasen-Koordinatenwandlers 65 netzfrequente und relativ zueinander um 90° phasenverschobene Referenzfrequenzsignale sin $\omega t$ bzw. cos $\omega t$ zugeführt, $\omega = 2\pi f_0$ = Kreisfrequenz, t = Zeit. An den Ausgängen 66 und 67 des Dreiphasen/Zweiphasen-Koordinatenwandlers 65 sind ein Wirkleistungssignal d, das dem Eingang eines Bandpassfilters 70 zugeführt ist, und ein Blindleistungssignal q, das dem Eingang eines Bandpassfilters 71 zugeführt ist, abgreifbar Die beiden Bandpassfilter 70 und 71 lassen 50-Hz-Schwingungen passieren, so dass deren Ausgangssignale x und y kennzeichnend sind für die Amplituden der Wirk-und Blindleistungskomponenten der zweiten Harmonischen von 100 Hz. Bezogen auf die Referenzfrequenz von 50 Hz im Dreiphasen/Zweiphasen-Koordinatenwandler 65 erscheint die in den Strom-Eingangssignalen am Eingang 64 enthaltene zweite Harmonische von 100 Hz an den Ausgängen 66 und 67 mit einer Frequenz von 100 Hz - 50 Hz = 50 Hz. Die Signale x und y werden über Koeffizientengeber oder Einstell-Potentiometer 72 bzw. 73 " + "-Eingängen eines Addiergliedes 74 zugeführt, dort addiert und dann dem " + "-Eingang eines weiteren Addiergliedes 60 zugeführt. Einem "-"-Eingang des Addiergliedes 60 wird ein Sollwert 59 = 0 zugeführt. Ausgangsseitig ist das Addierglied 60 über einen +90° Phasenschieber 27 bzw. über ein Stabilisierungsfilter für die zweite Harmonische und anschliessend über einen zweiseitigen Begrenzer 28 mit einem " + "-Eingang des Addiergliedes 23 verbunden. Die beiden Koeffizientengeber 72 und 73 werden zunächst auf den Wert bzw. Faktor "1" eingestellt und und dann solange im Wert erhöht, bis eine Kompensation der Oberschwingungen erreicht ist.

Gleichzeitig werden die Signale x und y einem Betragsbildner 75 zugeführt, in dem die Amplituden dieser Signale quadriert werden und aus dem Quadrat die Quadratwurzel gezogen wird. Ausgangsseitig ist der Betragsbildner 75 über einen Koeffizientengeber 76 und über ein Zeitglied 50 mit vorgebbarer Zeitverzögerung mit einem Eingang des Begrenzers 49 verbunden, wo das Ausgangssignal des Zeitgliedes 75 zur Einstellung des Grenzwertes des Begrenzers 49 dient. Ferner ist der Betragsbildner 75 ausgangsseitig über einen anderen Koeffizientengeber 77 und über ein Zeitglied 61 mit vorgebbarer Verzögerung mit einem Eingang des zweiseitigen Begrenzers 28 verbunden, wo das Ausgangssignal des Zeitgliedes 61 zur Einstellung der beiden Grenzwerte des Begrenzers 28 dient. Die mit 65 - 77 bezeichneten Bauelemente sind zu einer gestrichelt angedeuteten Oberschwingungsauswertschaltung 78 zusammengefasst.

Nach dieser Differenzstrommethode, bei der die Summe der Sekundärströme und ausserdem noch der Magnetisierungsstrom vom Primärstrom abgezogen werden, lassen sich Transformatorsättigungen gut ausregeln bzw. verhindern. Die einzelnen Ströme werden so getrimmt, dass im Nichtsättigungsfall der resultierende Strom Null herauskommt.

Anstelle dieser o.g. Differenzstrommethode kann auch eine Summenstrommethode verwendet werden, bei der einem Addierglied 63' nur die Drossel-Stromsignale $i_{L1}$ und $i_{L2}$ der Stromwandler 55 und 58 und/oder einem Addierglied 63" nur die Kondensator-Stromsignale $i_{C1}$ und $i_{C2}$ der Stromwandler 56 und 57 als oberschwingungshaltige Eingangssignale zugeführt werden. Die Addierglieder 63' und 63" sind ausgangsseitig jeweils mit Oberschwingungsauswertschaltungen 79 bzw. 80 verbunden, die gleich aufgebaut sind wie die o.g. Oberschwingungsschaltung 78. Man kann auch nur den Kompensatorstrom $i_K$ direkt dem dreiphasigen Eingang des Dreiphasen/Zweiphasen-Koordinatenwandlers 65 einer Oberschwingungsauswertschaltung 81 zuführen, welche im Aufbau der Oberschwingungsauswertschaltung 78 gleich ist. Die Koeffizientengeber 76 der Oberschwingungsauswertschaltungen 79 - 81 sind ausgangsseitig jeweils mit einem " + "-Eingang eines Addiergliedes 84 verbunden, das ausgangsseitig mit dem Eingang des Zeitgliedes 50 in Verbindung steht. Die Koeffizientengeber 77 der Oberschwingungsauswertschaltungen 79 - 81 sind ausgangsseitig jeweils mit einem " + "-Eingang eines Addiergliedes 85 verbunden, das ausgangsseitig mit dem Eingang des Zeitgliedes 61 in Verbindung steht. Die Addierglieder 74 der Oberschwingungsauswertschaltungen 79 - 81 sind ausgangsseitig jeweils mit einem " + "-Eingang eines Addiergliedes 86 verbunden, das ausgangsseitig mit dem " + "-Eingang des Addiergliedes 60 in Verbindung steht.

Die eingangsseitige Begrenzung im Begrenzer 49 dient der Schaffung einer Stellreserve für die Steuerung der Thyristoren der Wechselstromschalter 51 - 54. Die Stellreserve ist umso grösser, je grösser die Amplituden der zweiten Harmonischen sind; sie verschwindet aber nicht, wenn die zweite Harmonische nicht auftritt. Wichtig ist, dass möglichst wenig Stellreserve verbraucht wird, damit möglichst viel kapazitive Blindleistung zur Verfügung steht.

Die beidseitige Begrenzung im Begrenzer 28 in Abhängigkeit von der Grösse der auftretenden zweiten Harmonischen dient dazu, dass die normale Regelung über den Strom-Spannungsregler 22 nicht zu stark beeinträchtigt werden kann.

Der Referenzfrequenzsignal-Steuersatz 117 weist einen Dreiphasen/Zweiphasen-Koordinatenwandler 87 auf, dessen dreiphasigem Eingang das Spannungssignal U vom sekundärseitigen Ausgang des Spannungswandlers 16 zugeführt ist, dessen Referenzsignaleingängen die Referenzfrequenzsignale sin $\omega t$ und cos $\omega t$ von Ausgängen 92 bzw. 93 eines Sinus-Cosinus-Generators 91 zugeführt sind und dessen zweiphasige Ausgänge mit Signaleingängen eines Proportional-Integral-bzw. PI-Reglers 88 verbunden sind. Ausgangsseitig ist der PI-Regler 88 mit einem " + "-Eingang eines Addiergliedes 89 verbunden, das ausgangsseitig mit einem Steuereingang des Sinus-Cosinus-Generators 91 in Verbindung steht. Einem zweiten " + "-Eingang des Addiergliedes 89 ist ein Frequenzsollwert 90, entsprechend der Netzfrequenz $f_o$ von 50 Hz, zugeführt.

Fig. 5 zeigt eine Oberschwingungs-Stabilisierschaltung, die sich von der in Fig. 4 dargestellten im wesentlichen nur hinsichtlich einer anderen Oberschwingungsauswert-schaltung 115 und eines anderen ReferenzfrequenzsignalSteuersatzes 116 unterscheidet. Daher ist nachfolgend im wesentlichen nur das dargestellt und erwähnt, was unterschiedlich ist.

Das Frequenzreferenzsignal für die Dreiphasen/Zweiphasen-Transformation hat hier die Frequenz der zweiten Harmonischen und nicht die der Netzfrequenz $f_o$ wie bei der Oberschwingungs-Stabilisierungsschaltung gemäss Fig. 2. Einem Dreiphasen/Zweiphasen-Koordinatenwandler 98 der Oberschwingungs-Stabilisierungsschaltung 115 sind eingangsseitig der oberschwingungshaltige Kompensatorstrom $i_K$ sowie um 90° zueinander phasenverschobene Referenzfrequenzsignale sin $2\omega t$ und cos $2\omega t$ von Signalausgängen 96 bzw. 97 eines Dreiphasen/Zweiphasen-Koordinatenwandlers 95 des Referenzfrequenzsignal-Steuersatzes 116 zugeführt. Der Wirkleistungs-und der Blindleistungsausgang des Dreiphasen/Zweiphasen-Koordinatenwandlers 98 ist jeweils direkt (gestrichelt gezeichnete Tiefpassfilter 99 und 100 sind wegzudenken) mit dem " + "-Eingang eines Addiergliedes 101 bzw. 102 verbunden. An "-"-Eingänge der Addierglieder 101 und 102 sind Sollwertsignale 103 bzw. 104 mit dem Sollwert Null geführt. Ausgangsseitig sind die beiden Addierglieder 101 und 102 über PI-Regler 105 und 106 mit den zweiphasigen Eingängen eines Zweiphasen/Dreiphasen-Koordinatenwandlers 107 verbunden. Referenzfrequenzsignaleingänge des Zweiphasen/Dreiphasen-Koordinatenwandlers 107 sind mit den Ausgängen 92 bzw. 93 eines Sinus-Cosinus-Generators 91 des Referenzfrequenzsignal-Steuersatzes 116 verbunden, welcher Sinus-Cosinus-Generator 91 netzfrequente Signale sin $\omega t$ und cos $\omega t$ liefert. Die drei Ausgänge des Zweiphasen/Dreiphasen-Koordinatenwandlers 107 sind je über einen Koeffizientengeber 108 bzw. 109 bzw. 110 zur Gewichtung mit je einem " + "-Eingang eines Addiergliedes 111 verbunden, das ausgangsseitig an einen " + "-Eingang des Addiergliedes 86 angeschlossen ist. Das Addierglied 86 ist ausgangsseitig direkt mit dem Steuersignaleingang des zweiseitigen Begrenzers 28 verbunden, ohne Zwischenschaltung des Addiergliedes 60 und des 90° Phasenschiebers 27 gemäss Fig. 4. Das Ausgangssignal des Begrenzers 28 ist wieder dem Addierglied 23 zugeführt, vgl. Fig. 4. Die Ausgangssignale x und y der PI-Regler 105 und 106 sind ferner einem Betragsbildner 112 zugeführt. Dessen Ausgangssignal ist einerseits über einen Koeffizientengeber 113 einem " + "-Eingang des Addiergliedes 84 und andererseits über einen Koeffizientengeber 114 einem " + "-Eingang des Addiergliedes 85 zugeführt. Das Addierglied 84 ist ausgangsseitig über das Zeitglied 50 mit dem in Fig. 5 nicht dargestellten Begrenzer 49 verbunden. Das Addierglied 85 ist ausgangsseitig über das Zeitglied 61 mit dem Begrenzer 61 verbunden.

Zusätzlich oder alternativ zu der Oberschwingungsauswertschaltung 115 können gleich aufgebaute Oberschwingungsauswertschaltungen vorgesehen sein, welche eingangsseitig die Ausgangssignale der Addierglieder 63' bzw 63" gemäss Fig. 4 erhalten. Die Signalausgänge dieser Oberschwingungsauswertschaltungen sind dann entsprechend " + "-Eingängen der Addierglieder 84, 85 und 86 zugeführt. Vorzugsweise wird der Oberschwingungsauswertschaltung 115 anstelle des Kompensatorstromes $i_K$ das Ausgangssignal des Addiergledes 63 gemäss Fig. 4 zugeführt, wobei die Addierglieder 84, 85 und 86 entfallen.

Der Referenzfrequenzsignal-Steuersatz 116 gemäss Fig. 5 ist bezüglich der Bauelemente 87 - 91 gleich aufgebaut wie der Referenzfrequenzsignal-Steuersatz 117 gemäss Fig. 4. Die Ausgänge 92 und 93 des Sinus-Cosinus-Generators 91 sind über einen Zweiphasen/Dreiphasen-Koordinatenwandler 94 mit dem Dreiphasen/Zweiphasen-Koordinatenwandler 95 verbunden, der an seinen Ausgängen 96 und 97 das sin $2\omega t$-und cos $2\omega t$-Signal liefert und dessen Frequenzreferenzsignaleingänge mit den Ausgängen 92 und 93 verbunden sind.

Anstelle der Addierglieder 101 und 102 sowie der anschlies senden PI-Regler 105 und 106 der Oberschwingungsauswertschaltung 115 können auch Tiefpassfilter 99 bzw. 100 vorgesehen sein, die Frequenzen über 10 Hz sperren, da die zweite Harmonische hier als Gleichspannungssignal anfällt. An den Tiefpassfiltern 99 und 100 sind ausgangsseitig die Signale x und y abgreifbar.

Anhand der Fig. 6 soll nun ein Dreiphasen/Zweiphasen-Koordinatenwandler (65, 87, 95, 98) erläutert werden, der drei Werte R, S, T eines Dreiphasensystems in entsprechende Werte eines rechtwinkligen d-, q-Koordinatensystems transformiert. Der Winkel zwischen den beiden Koordinatensystemen ist mit $\epsilon$ bezeichnet; er transformiert die R, S, T-Werte in ein rechtwinkliges $\alpha$-, $\beta$-Koordinatensystem. In diesem Fall stimmt der $\alpha$-Vektor mit dem R-Vektor überein. Die Transformationsgleichungen lauten:   $\alpha = R$,

$\beta = (1/\sqrt{3}) \bullet (S-T)$,
$d = \alpha \bullet \cos \epsilon + \beta \bullet \sin \epsilon$,
$q = -\alpha \bullet \sin \epsilon + \beta \bullet \cos \epsilon$.

Anhand der Fig. 7 wird ein Zweiphasen/Dreiphasen-Koordinatenwandler (94, 107) erläutert, der zwei Werte eines rechtwinkligen d-, q-Koordinatensystems in drei Vektoren eines dreiphasigen Koordinatensystems transformiert. $\epsilon$ bezeichnet den Winkel zwischen den beiden Koordinatensystemen. Die rechtwinkligen d-, q-Koordinaten werden durch eine Drehung um den Winkel $\epsilon$ in rechtwinklige $\alpha$-, $\beta$-Koordinaten transformiert. Die Transformationsgleichungen lauten:

$\alpha = d \bullet \cos \epsilon - q \bullet \sin \epsilon$,
$\beta = d \bullet \sin \epsilon + q \bullet \cos \epsilon$,
$R = \alpha$,
$S = -0,5 \bullet \alpha + 0,5 \bullet \sqrt{3} \bullet \beta$,
$T = -0,5 \bullet \alpha -0,5 \bullet \sqrt{3} \bullet \beta$.

Die Schaltungen gemäss den Fig. 4 und 5 sind für eine Erfassung und Dämpfung der zweiten Harmonischen ausgelegt. Es versteht sich, dass in ähnlicher Weise, wie es in Verbindung mit Fig. 2 erläutert wurde, auch andere Harmonische, erforderlichenfalls zusätzlich, erfasst und gedämpft werden können. Es müssen dann zusätzliche Oberschwingungsauswertschaltungen vorgesehen werden, die auf diese Harmonischen abgestimmt sind.

Die Netzfrequenz $f_0$ kann statt 50 Hz selbstverständlich auch z.B 60 Hz betragen.

Anstelle der Wechselstromschalter 12, 13 und 51 - 54 mit zwei antiparallelen Thyristoren können auch mehrere derartige Wechselstromschalter in Reihe geschaltet sein.

Bei den Schaltungen gemäss den Fig. 4 und 5 können die Wirkleistungskomponente d und/oder die Blindleistungskomponente q gewichtet, addiert oder subtrahiert werden, bevor sie dem Stabilisierungsfilter der zweiten Harmonischen zugeführt werden, dessen Ausgangssignal direkt, und zwar dreiphasig, nicht phasenindividuell, auf den Zündimpulsgenerator 24 einwirkt.

Bei der Schaltung gemäss Fig. 5 können zwei der drei Koeffizientengeber 108 - 110 den Koeffizienten Null aufweisen. Wesentlich ist, dass nur ein Steuersignal S23 zur Steuerung aller drei Phasen verwendet wird. Vorzugs weise erfolgt die Signalauswertung und Erzeugung des Steuersignals S23 in digitaler Form mittels eines schnellen Mikroprozessors. Dadurch können Wechselstromnetze mit bereits vorhandenen, herkömmlichen Blindleistungskompensatoren auf einfache Weise ergänzt und hinsichtlich störender Oberschwingungen bedämpft werden.

## Ansprüche

1. Verfahren zur Dämpfung mindestens einer elektrischen Oberschwingung zur Netzfrequenz in einem mehrphasigen Wechselstromnetz,

a) an das mindestens eine Impedanz (9, 10, L1, L2, C1, C2) über einen magnetisch sättigbaren Transformator (8) und mindestens einen anschnittgesteuerten Wechselstromschalter (12, 13, 51 - 54) angeschlossen ist,

b) der in Abhängigkeit von einem äquidistanten Steuersignal eines Strom-Spannungsreglers (22) gesteuert wird,

c) wobei in Abhängigkeit vom Strom ($i_{Su}$, $i_{L1}$, $i_{L2}$ , $i_{C1}$, $i_{C2}$) durch mindestens eine Impedanz (9, 10, L1, L2, C1, C2) ein Stabilisierungssignal erzeugt wird,

d) das nach einer Phasenverschiebung um +90° dem Ausgangssignal des Strom-Spannungsreglers (22) im Sinne einer Gegenkopplung der Oberschwingung überlagert wird,

dadurch gekennzeichnet,

e) dass in Abhängigkeit von der Eingangsspannung ($U_N$) des Transformators (8) und in Abhängigkeit mindestens des Stromes durch eine Impedanz (9, 10; L1, L2, C1, C2) mindestens ein elektrisches Leistungssignal (Q; p, q) mit einer Wirk-und/oder Blindleistungskomponente (p, q) erzeugt wird,

f) dass jedes Leistungssignal mindestens einer Frequenzfilterung für jede zu kompensierende elektrische Oberschwingung und

g) anschliessend der Phasenverschiebung um +90° unterzogen wird, bevor es dem äquidistanten Ausgangs signal des Stromspannungsreglers überlagert wird zu einem Steuersignal (S23) für die Wechselstromschalter.

2. Verfahren nach Anspruch 1, dadurch gekennzeichnet,

a) dass jedes gefilterte, phasenverschobene Stabilisierungssignal auf Phasengrenzwertüberschreitungen eines vorgebbaren unteren und oberen Phasengrenzwertes überwacht und im Falle von Grenzwertüberschreitungen auf den unteren oder oberen Grenzwert begrenzt wird,

b) wobei die Phasengrenzwerte derart von der Amplitude der zu dämpfenden Oberschwingungen abhängig sind, das bei grösserer Amplitude eine stärkere Begrenzung resultiert,

c) dass jedes so begrenzte Stabilisierungssignal zu dem äquidistanten Ausgangssignal des Strom-Spannungsreglers (22) addiert wird,

d) insbesondere, dass jedes Stabilisierungssignal vor der Phasenverschiebung derart gewichtet ($\alpha$) wird, dass es im Nichtsättigungsfall des Transformators (8) den Wert Null annimmt, und dass es zeitlich um eine vorgebbare erste Zeitdauer verzögert wird, bevor es zu dem äquidistanten Ausgangssignal des Strom-Spannungsreglers addiert wird.

3. Verfahren nach Anspruch 1 oder 2, dadurch gekennzeichnet,

a) dass das Stromsignal zur Bildung des mindestens einen elektrischen Leistungssignals in Abhängigkeit vom primärseitigen Eingangsstrom ($i_K$) des Transformators (8) oder

b) in Abhängigkeit von der Summe der induktiven Ströme ($i_{L1}$, $i_{L2}$) der Impedanz (L1, L2) oder

c) in Abhängigkeit von der Summe der kapazitiven Ströme ($i_{C1}$, $i_{C2}$) der Impedanz (C1, C2) gebildet wird.

4. Verfahren nach einem der Ansprüche 1 bis 3, dadurch gekennzeichnet,

a) dass das Stromsignal zur Bildung des mindestens einen elektrischen Leistungssignals die Summe der induktiven und kapazitien Ströme ($i_{Su}$ ; $i_{L1}$, $i_{L2}$, $i_{C1}$, $i_{C2}$) der mindestens einen Impedanz (9, 10; L1, L2, C1, C2) von dem primärseitigen Eingangsstrom ($i_K$) des Transformators (8) subtrahiert wird,

b) insbesondere, dass von dem so gebildeten Differenzstrom en durch Integration aus der Eingangsspannung ($U_N$) des Transformators (8) abgeleiteter Transformator-Magnetisierungsstrom ($i_M$) subtrahiert wird.

5. Verfahren nach einem der Ansprüche 1 bis 4, dadurch gekennzeichnet,

a) dass eine Messung der Oberschwingungen als Wirkund Blindleistungskomponenten (d, q) mittels einer Dreiphasen/Zweiphasen-Koordinatentransformation aus den die Oberschwingungen enthaltenden Eingangssignalen ($U, i$; $i_K$, $i_{Su}$, $i_M$; $i_{L1}$, $i_{L2}$; $i_{C1}$, $i_{C2}$; $i_K$) bezogen auf eine netzfrequente Referenzfrequenz (sin $\omega t$, cos $\omega t$) erfolgt,

b) dass jede Leistungskomponente mindestens einer Bandpassfilterung (26, 26' 26", 70, 71) unterzogen wird,

c) wobei jedes Bandpassfilter auf eine der Frequenzen $(2n-1) \bullet f_o$, n ganzzahlig $\geq 1$, $f_o$ = Netfrequenz, abgestimmt ist,

d) dass die beiden Filterausgangssignale (x, y) der auf eine bestimmte Frequenz abgestimmten Bandpassfilter (70, 71) für die beiden Leistungskomponenten quadratisch addiert werden,

e) dass aus der so gebildeten Quadratsumme die Quadratwurzel gezogen wird,

f) dass in Abhängigkeit von dem so gebildeten Quadratwurzelsignal das äquidistante Ausgangssignal des Strom-Spannungsreglers (22) derart einseitig begrenzt wird (49), dass die Stellreserve des StromSpannungsreglers grösser wird, je grösser der Wert der Quadratwurzel ist, entsprechend einer grösseren Amplitude der zu dämpfenden Oberschwingung,

g) insbesondere, dass das Quadratwurzelsignal gewichtet ($\alpha$) und ein zeitlich um eine vorgebbare zweite Zeitdauer verzögert wird, bevor es das äquidistante Ausgangssignal des Strom-Spannungsreglers (22) begrenzt.

6. Verfahren nach einem er Ansprüche 3 bis 5, dadurch gekennzeichnet,

a) dass das Wechselstromnetz (15) ein dreiphasiges Drehstromnetz ist und jeder Wechselstromschalter (12, 13, 51 - 54) dreiphasig angesteuert wird und

b) dass mindestens ein Bandpassfilter auf die Netzfrequenz ($f_o$) abgestimmt ist.

7. Verfahren nach einem der Ansprüche 1 bis 4, dadurch gekennzeichnet,

a) dass die Messung der Oberschwingungen als Wirkund Blindleistungskomponente mittels einer Dreiphasen/Zweiphasen-Koordinatentransformation (98) aus den die Oberschwingungen enthaltenden Eingangssig nalen ($U,i$; $i_K$, $i_{Su}$, $i_M$; $i_{L1}$, $i_{L2}$; $i_{C1}$, $i_{C2}$; $i_K$) erfolgt, bezogen auf ein Referenzsignal mit der Frequenz der zweiten Oberschwingung zur Netzfrequenz,

b) dass jede Leistungskomponente anschliessend einer Tiefpassfilterung oder Proportional-Integral-Regelung unterworfen wird,

c) dass die beiden Filterausgangssignale ($x$, $y$) für die beiden Leistungskomponenten quadratisch addiert werden,

d) dass aus der so gebildeten Quadratsumme die Quadratwurzel gezogen wird,

e) dass in Abhängigkeit von dem so gebildeten Quadratwurzelsignal das äquidistante Ausgangssignal des Strom-Spannungsreglers (22) derart einseitg begrenzt wird (49), dass die Stellreserve des StromSpannungs-Reglers grösser wird, je grösser der Wert der Quadratwurzel ist, entsprechend einer grösseren Amplitude der zu dämpfenden Oberschwingung,

f) insbesondere, dass das Quadratwurzelsignal gewichtet ($\alpha$) und zeitlich um eine vorgebbare zweite Zeitdauer verzögert wird, bevor es das äquidistante Ausgangssignal des Strom-Spannungsreglers (22) begrenzt.

8. Verfahren nach Anspruch 7, dadurch gekennzeichnet,

a) dass das Wechselstromnetz (15) ein dreiphasiges Drehstromnetz ist und jeder Wechselstromschalter (12, 13; 51 - 54) dreiphasig angesteuert wird und

b) dass das Ausgangssignal jeder Tiefpassfilterung oder Proportional-Integral-Regelung einer Zweiphasen/Dreiphasen-Koordinatentransformation be zogen auf eine netzfrequente Referenzfrequenz unterworfen wird, bevor es um 90° in der Phase verschoben wird.

FIG. 1

FIG. 2

FIG. 3

FIG. 6

FIG. 7

FIG. 5

FIG. 4